# Europäisches Patentamt

# European Patent Office

# Office européen des brevets

(19)

(11) Veröffentlichungsnummer: **0 253 997**
**B1**

(12) **EUROPÄISCHE PATENTSCHRIFT**

(45) Veröffentlichungstag der Patentschrift:
29.08.90

(51) Int. Cl.⁵: **G01N 31/22**, G01N 21/77

(21) Anmeldenummer: **87107936.4**

(22) Anmeldetag: **02.06.87**

(54) **Prüfröhrchen mit mehreren Reagenzschichten.**

(30) Priorität: **24.07.86 DE 3625085**

(43) Veröffentlichungstag der Anmeldung:
**27.01.88 Patentblatt 88/4**

(45) Bekanntmachung des Hinweises auf die Patenterteilung:
**29.08.90 Patentblatt 90/35**

(84) Benannte Vertragsstaaten:
**AT BE CH DE ES FR GB GR IT LI LU NL SE**

(56) Entgegenhaltungen:
**DE-A- 2 359 040**

(73) Patentinhaber: **Drägerwerk Aktiengesellschaft,
Moislinger Allee 53-55, D-2400 Lübeck 1(DE)**

(72) Erfinder: **Heckmann, Johannes, Ing.-Chem. (grad.),
Gothmunder Weg 32, D-2400 Lübeck(DE)**
Erfinder: **May, Wolfgang, Dr. Dipl.-Chem., Buchenweg 6,
D-2067 Reinfeld(DE)**

ACTORUM AG

## Beschreibung

Die Erfindung betrifft ein Prüfröhrchen mit mehreren, die Nachweisreaktion beeinflussenden Reagenzschichten, die voneinander mittels einer durchlässigen Zwischenlage getrennt sind.

Prüfröhrchen mit mehreren Reagenzschichten werden insbesondere für solche Fälle eingesetzt, in denen die hintereinandergeschalteten Schichten entweder eine stufenweise Reaktion des nachzuweisenden Schadstoffes bewirken, bis sie schließlich in einer Anzeigeschicht einer colorimetrischen Auswertung zugänglich gemacht werden, oder auch solche Prüfröhrchen, bei denen der Verfärbungsgrad der Anzeigeschicht mit einer Farbvergleichsschicht verglichen und somit ausgewertet wird.

Zum Nachweis verschiedener gasförmiger Schadstoffe ist es notwendig, diese zunächst in einer Vorschaltschicht in solche Reaktionsprodukte umzuwandeln, die in einer nachfolgenden Anzeigeschicht zu einer deutlichen Verfärbung führen.

Ein solches Prüfröhrchen ist aus der DE-OS 27 54 638 bekanntgeworden.

Zum Nachweis von Aerosolen, Gasen und Dämpfen, wie z. B. Chlorwasserstoff, Fluorwasserstoff oder auch Schwefeldioxid, werden in der Vorschicht solche Reaktionsprodukte erzeugt, die in der Nachschaltschicht mit bekannten Reagenzien für diese Reaktionsprodukte zu einer Verfärbung führen.

Um eine gesicherte Anzeige einer Verfärbung zu erreichen, müssen die die Verfärbung auslösenden Reaktionsprodukte aus der Vorschicht gasförmig sein. Dadurch ist aber auch eine ungehinderte Diffusion der Reaktionsprodukte in die Anzeigeschicht möglich, so daß auch nach abgeschlossener Messung noch Restmengen von flüchtigen Bestandteilen aus der Vorschicht in die Reagenzschicht übertreten und so die Verfärbung in der Anzeigeschicht nachträglich verfälschen oder gar rückgängig machen können. Z. B. wird zum Nachweis von Vinylchlorid eine Vorschicht mit imprägnierter Chromatschwefelsäure und einer Anzeigeschicht mit einem Säureindikator (z. B. Bromphenolblau) verwendet. Unter Einfluß des Vinylchlorids bildet sich mit der Chromatschwefelsäure Salzsäure, die mit dem Bromphenolblau in der Anzeigeschicht zu einer Verfärbung führt. Außerdem bildet Vinylchlorid mit Schwefelsäure weitere Zersetzungsprodukte, wie z. B. Chromylchlorid. Nach Abschluß der Messung würde dieses Chromylchlorid durch die poröse Zwischenlage in die Anzeigeschicht diffundieren und zu einer zusätzlichen Verfärbung führen. Weiterhin kann die Schwefelsäure der Vorschicht dem Reagenzsystem in der Anzeigeschicht die gebildete Salzsäure entziehen und dadurch ein unstabiles Verhalten der einmal eingetretenen Verfärbung verursachen. Eine eindeutige Zuordnung zwischen dem Ausmaß der Verfärbung und der nachgewiesenen Schadstoffmenge ist dann nicht mehr möglich.

Sofern die Durchströmung des Schadstoffes durch das Prüfröhrchen durch einen diskontinuierlichen Pumpvorgang aus mehreren Einzelpumphüben bewirkt wird, muß auch im Zeitraum zwischen den Hüben eine Diffusion der Bestandteile aus der Vorschicht in die Reagenzschicht verhindert werden. Soll z. B. ein Prüfröhrchen zum Nachweis von Methylenchlorid eingesetzt werden, so ist die Vorschicht aus Kaliumdichromat mit konzentrierter Schwefelsäure, auf einem Träger imprägniert, gebildet. Die Anzeigeschicht besteht aus in Wasser gelöstem Palladiumsalz, welches ebenfalls auf einem Träger imprägniert ist. Das Methylenchlorid wird in der Vorschicht zu Kohlenmonoxid umgewandelt, welches das Palladiumsalz verfärbt. Der flüchtige Wasseranteil darf auch während der Ruhezeit zwischen den nachfolgenden Pumpenhüben nicht in die Vorschicht zurückdiffundieren, da die konzentrierte Schwefelsäure so sehr verdünnt würde, daß eine zuverlässige Reaktion des nachzuweisenden Schadstoffes in der Vorschicht zu Kohlenmonoxid verhindert würde.

Bei der Verwendung der bekannten Anordnung von Vorschicht und Anzeigeschicht ist es daher nicht möglich, in allen Anwendungsfällen eine gesicherte Verfärbung der Anzeigeschicht zu erreichen.

Der vorliegenden Erfindung liegt somit die Aufgabe zugrunde, ein Prüfröhrchen der genannten Art so zu verbessern, daß ein ungewollter Austausch von Reaktionsprodukten oder Reagenzien zwischen den Schichten während des Meßvorganges und auch während der Ruhezeit, d. h. vor und nach der Messung, verhindert wird.

Die Lösung der Aufgabe geschieht dadurch, daß die Zwischenlage mit einem nur während der Durchströmung sich öffnenden Ventilelement versehen ist.

Ein solches Ventilelement gibt den Weg für die Reaktionsprodukte aus der Vorschicht in die Anzeigeschicht nur solange frei, wie eine Durchströmung des Prüfröhrchens erzeugt wird. Eine ungewollte Diffusion von Reaktionsprodukten oder Reagenzbestandteilen zwischen Vorschicht und Anzeigeschicht wird verhindert.

In zweckmäßiger Ausbildung der Erfindung kann das Ventilelement aus einem federbelasteten Tellerventil bestehen. Dieses wirkt dann in einfacher Weise als Rückschlagventil.

Um möglichst wenig bewegbare Bauteile und eine geringe Bauhöhe zu erzielen, kann vorgesehen sein, daß das Ventilelement aus einer geschlitzten elastischen Scheibe gebildet ist, welche zwischen Halteelementen aufgenommen ist.

Eine weitere günstige Ausbildung der Erfindung besteht darin, das Ventilelement in Form eines federbelasteten Kugelventils auszuführen.

Ein Ausführungsbeispiel der Erfindung wird anhand der schematischen Zeichnung dargestellt und im folgenden erläutert.

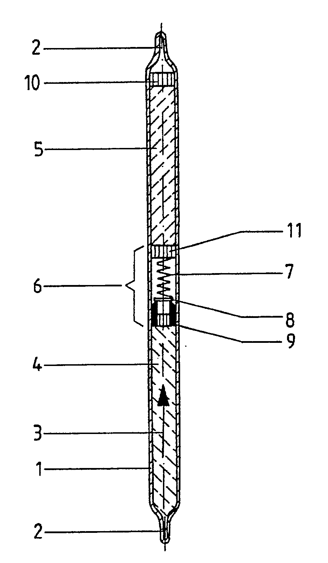

In der einzigen Figur ist ein Prüfröhrchen (1) mit zwei abbrechbaren Spitzen (2) dargestellt, welches in durch den Pfeil (3) dargestellter Strömungsrichtung eine Vorschicht (4) und eine Anzeigeschicht (5) besitzt. Die beiden Schichten (4, 5) sind durch eine Zwischenlage (6) voneinander getrennt, die aus einem durchlässigen Halteelement (11) und einem als Ventilsitz ausgebildeten weiteren Halteelement (9) sowie der dazwischen angeordneten Ventilscheibe (8) und der Schraubenfeder (7) besteht. Die Ventilplatte (8), beispielsweise in Form eines Glimmerplättchens, wird durch die Feder (7) gegen den Sitz (9) gedrückt. Die Anzeigeschicht (5) ist zur Spitze (2) hin mit einem Stopfen (10) in ihrer Lage festgehalten.

Bei abgebrochenen Spitzen (2) wird das Prüfröhrchen (1) in Richtung des Pfeiles (3) durchströmt. Während der Durchströmung hebt die Ventilplatte (8) von dem Sitz (9) ab und gibt somit den Weg für die in der Vorschicht (4) gebildeten Reaktionsprodukte in die Anzeigeschicht (5) frei. Wird die Durchströmung unterbrochen, beispielsweise infolge einzelner aufeinanderfolgender Pumphübe, verschließt das Ventilelement (8, 9) den Diffusionsweg zwischen Vorschicht (4) und Anzeigeschicht (5). Auch nach abgeschlossener Messung findet bei geöffneten Spitzen (2) kein Diffusionsaustausch zwischen flüchtigen Bestandteilen aus der Vorschicht (4) und der Anzeigeschicht (5) statt.

**Patentansprüche**

1. Prüfröhrchen mit mehreren, die Nachweisreaktion beeinflussenden Reagenzschichten, die voneinander mittels einer durchlässigen Zwischenlage getrennt sind, dadurch gekennzeichnet, daß die Zwischenlage (6) mit einem nur während der Durchströmung sich öffnenden Ventilelement (8, 9) versehen ist.

2. Prüfröhrchen nach Anspruch 1, dadurch gekennzeichnet, daß das Ventilelement aus einem federbelasteten Tellerventil (8, 9) besteht.

3. Prüfröhrchen nach Anspruch 1, dadurch gekennzeichnet, daß das Ventilelement aus einer zwischen Halteelementen aufgenommenen geschlitzten elastischen Scheibe besteht.

4. Prüfröhrchen nach Anspruch 1, dadurch gekennzeichnet, daß das Ventilelement aus einem federbelasteten Kugelventil besteht.

**Claims**

1. A test tube with several reagent layers influencing the detection reaction, which are separated from each other by means of a permeable intermediate layer, characterised in that the intermediate layer (6) is provided with a valve element (8, 9) only opening during throughflow.

2. A test tube according to claim 1, characterised in that the valve element consists of a spring-loaded disc valve (8, 9).

3. A test tube according to claim 1, characterised in that the valve element consists of a slotted flexible disc held between support elements.

4. A test tube according to claim 1, characterised in that the valve element consists of a spring-loaded spherical valve.

**Revendications**

1. Tube à essai comportant plusieurs couches de réactifs influençant la réaction de décèlement et qui sont séparées l'une de l'autre par une couche intermédiaire perméable, caractérisé en ce que la couche intermédiaire (6) est pourvue d'un élément à soupape (8, 9) s'ouvrant uniquement pendant le passage.

2. Tube à essai selon la revendication 1, caractérisé en ce que l'élément à soupape à siège plan (8, 9) soumis à l'action d'un ressort.

3. Tube à essai selon la revendication 1, caractérisé en ce que l'élément à soupape est constitué d'un disque élastique fendu, logé entre des éléments de fixation.

4. Tube à essai selon la revendication 1, caractérisé en ce que l'élément à soupape est constitué d'une soupape à billes soumise à l'action d'un ressort.

EP 0 253 997 B1